(19) **Europäisches Patentamt**
**European Patent Office**
**Office européen des brevets**

(11) **EP 4 748 222 A1**

(12) # EUROPÄISCHE PATENTANMELDUNG

(43) Veröffentlichungstag:
**27.05.2026  Patentblatt 2026/22**

(21) Anmeldenummer: **25215676.5**

(22) Anmeldetag: **13.11.2025**

(51) Internationale Patentklassifikation (IPC):
***A01G 3/053*** *(2006.01)*

(52) Gemeinsame Patentklassifikation (CPC):
**A01G 3/053**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **21.11.2024  DE 102024134325**

(71) Anmelder: **Andreas Stihl AG & Co. KG**
**71336 Waiblingen (DE)**

(72) Erfinder:
• **Müller, Samuel**
  **71083 Herrenberg (DE)**
• **Waiblinger, Manuel**
  **70597 Stuttgart (DE)**

(54) **HANDGEHALTENES GARTENGERÄT ZUR BEDIENERGESTEUERTEN POSITIONIERUNG EINES MESSERTRÄGERS**

(57)    Es wird ein handgehaltenes Gartengeraet (1) zur bedienergesteuerten Positionierung eines Messertraegers, insbesondere eine Heckenschere oder eine Kreiselschere, vorgeschlagen, das mindestens einen hin- und hergehend angetriebenen Messertraeger (6, 7), einen Handgriff (3) mit einem Gashebel (5), einen Antriebsmotor (10) zum Antrieb des Messertraegers (6,7) und eine Kontrolleinrichtung (9) zur Steuerung einer Drehzahl (n) des Antriebsmotors (10) umfasst, wobei die Kontrolleinrichtung (9) ausgebildet ist, die Drehzahl (n) des Antriebsmotors (10) in Abhaengigkeit von einem auswaehlbaren Positioniermodus (PM) des Gartenge-raets zu steuem, und wobei die Drehzahl (n) des Antriebsmotors (10) in dem Positioniermodus (PM) auf eine Positionierdrehzahl (n.pos) begrenzt ist, derart, dass der Messertraeger (6, 7) im Positioniermodus (PM) hoechstens zweimal pro Sekunde, insbesondere hoechstens einmal pro Sekunde, hin- und her bewegt wird, sodass die Position des Messertraegers (6,7) durch Loslassen des Gashebels (5) oder eines vom Gashebel verschiedenen Bedienelements (15) des Gartengeraets durch den Bediener waehlbar ist.

Fig. 1

**Beschreibung**

Die Erfindung betrifft ein handgehaltenes Gartengerät, das dazu ausgebildet ist, mindestens einen Messerträger bedienergesteuert zu positionieren.

Handgehaltene Gartengeräte wie beispielsweise Heckenscheren oder Kreiselscheren, weisen eine Schneideinrichtung zum Beschneiden von Hecken, Sträuchern, Gras und dergleichen auf. Typischerweise sind bei einer solchen Schneideinrichtung mehrere Messer an zwei übereinander angeordneten Messerträgern ausgebildet, von denen mindestens ein Messerträger beweglich ist. Werden die beiden Messerträger und mit ihnen deren Messer relativ zueinander bewegt, wirken jeweils zwei Messer unterschiedlicher Messerträger paar- und zweitweise zusammen und verwirklichen auf diese Weise funktional eine Mehrzahl von Scheren.

Als nachteilig hat sich bei vorbekannten Schneideinrichtungen jedoch herausgestellt, dass die Messer entlang der Messerträger unterschiedlich stark verschleißen können. Dies kann beispielsweise dadurch hervorgerufen sein, dass ein Bediener nur einen Teil der gesamten Länge bzw. des gesamten Umfangs der Messerträgers nutzt. Zum Nachschleifen der Messer genügt es daher nicht, den oberen Messerträger einmalig zum unteren Messerträger auszurichten, denn diese Ausrichtung ist aufgrund des unterschiedlichen Verschleißes der Messer entlang der Messerträger nicht für alle Bereiche der Messerträger passend. Vielmehr ist es erforderlich, dass der Bediener durch Sichtprüfung die Messerträger so zueinander ausrichtet, dass zunächst ein erster Teil der Messer nachgeschärft werden kann und der Bediener die Messerträger danach so zueinander ausrichtet, dass ein zweiter Teil der Messer nachgeschärft werden kann. Es ist bislang weder einfach noch reproduzierbar möglich die Messerträger in eine vom Bediener gewünschte Ausrichtung zueinander zu bringen. In welcher Stellung die Messerträger des Gartengeräts nach dem Loslassen des Gashebels oder eines vom Gashebel verschiedenen Bedienelements zum Stoppen kommen, ist für den Bediener nicht vorhersehbar. Es sind daher viele Versuche nötig, um zufällig eine der gewünschten Ausrichtung möglichst nahekommende Stellung der Messerträger zu erhalten. Dies führt dazu, dass das Nachschärfen zeitaufwändig ist und der Bediener womöglich eine Stellung der Messerträger zum Nachschärfen benutzt, die nicht der von ihm gewünschten Ausrichtung entspricht.

Es besteht daher die Aufgabe ein bezüglich der genannten Nachteile verbessertes handgehaltenes Gartengerät zur bedienergesteuerten Positionierung eines Messerträgers anzugeben. Diese Aufgabe wird durch das in Anspruch 1 angegebene handgehaltene Gartengerät gelöst.

Erfindungsgemäß umfasst das handgehaltene Gartengerät eine Kontrolleinrichtung, die ausgebildet ist, die Drehzahl des Antriebsmotors in Abhängigkeit von einem auswählbaren Positioniermodus des Gartengeräts zu steuern, wobei die Drehzahl des Antriebsmotors im Positioniermodus auf eine Positionierdrehzahl begrenzt ist, derart, dass der Messerträger im Positioniermodus höchstens zweimal pro Sekunde, insbesondere höchstens einmal pro Sekunde, hin- und her bewegt wird.

Unter bedienergesteuerter Positionierung eines Messerträgers wird verstanden, dass durch das Loslassen des Gashebels oder eines vom Gashebel verschiedenen Bedienelements des Gartengeräts der Antriebsmotor entweder von der Kontrolleinrichtung gestoppt wird, oder falls der Antriebsmotor bereits steht, der Motorstillstand beibehalten wird und so ein Antrieb des Messerträgers unterbunden ist. Der Messerträger behält damit im Wesentlichen seine zum Zeitpunkt des Stopps des Antriebsmotors vorliegende Position bei. Der Bediener wählt die Position des Messerträgers demnach dadurch, zu welchem Zeitpunkt er den Gashebel oder das vom Gashebel verschiedene Bedienelement loslässt. Sofern das Gartengerät eine Zweihandschaltung aufweist, kann das vom Gashebel verschiedene Bedienelement insbesondere ein anderes Bedienelement der Zweihandschaltung sein.

Das handgehaltene Gartengerät weist einen Arbeitsmodus auf, in dem das Gartengerät zum Schneiden von Hecken, Sträuchern, Gras und dergleichen von dem Bediener betrieben wird. Im Arbeitsmodus und bei Vollgas, also bei vollständig betätigtem Gashebel bzw. einem Betätigungsgrad des Gashebels von 100%, bewegt sich der Messerträger üblicherweise mindestens 40 mal pro Sekunde hin und her. Durch eine derart hohe Schnittfrequenz erfolgt ein glatter Schnitt. Insbesondere für den Trimmschnitt, also dem Schnitt dünner Zweige, ist eine hohe Schnittfrequenz erforderlich, um ein gutes Schnittbild zu erzielen.

Dadurch, dass die maximale Drehzahl des Antriebsmotors im Positioniermodus stark gegenüber der maximalen Drehzahl des Antriebsmotors im Arbeitsmodus reduziert ist, nämlich so, dass der Messerträger nur noch höchstens zweimal, insbesondere höchstens einmal, statt mindestens 40-mal pro Sekunde hin- und her bewegt wird, ist auch die maximale Geschwindigkeit des Messerträgers stark reduziert, sodass sich der Messerträger viel gezielter in einer gewünschten Position von dem Bediener stoppen lässt. Dies hängt damit zusammen, dass die Bewegung des mindestens einen angetriebenen Messerträgers im Positioniermodus sehr viel langsamer als im Arbeitsmodus ist, sodass der Bediener die relative Position beider Messerträger leichter optisch erfassen kann und folglich auch den Zeitpunkt des Stopps zielsicherer wählen kann. Dadurch, dass die Drehzahl im Positioniermodus stark gegenüber der Drehzahl des Arbeitsmodus reduziert ist, ist auch die im Antriebsstrang gespeicherte Bewegungsenergie geringer, sodass der mindestens eine angetriebene Messerträger auch schneller, insbesondere unmittelbar, nach dem Loslassen des Gashebels oder des vom Gashebel verschiedenen Bedienelements zum Stillstand kommt. Dadurch, dass die Positionierdrehzahl begrenzt ist, ist ein ggf. vorhandener Nachlauf des Messerbalkens reproduzierbar und vom Bediener damit berücksichtigbar.

Auf diese Weise kann der Bediener seine beabsichtigte Ausrichtung der Messerträger zueinander in einer geringeren Anzahl an Versuchen, insbesondere in einem Versuch, einstellen.

Der konstruktive Aufbau eines handgehaltenen Gartengeräts mit mindestens einem hin- und hergehend angetriebenem Messerträger ist dem Fachmann bekannt. Ein Antriebsmotor treibt ein Umwandlungsgetriebe an, das häufig als Exzentergetriebe ausgebildet ist, um die kontinuierliche Drehung des Antriebsmotors in eine hin- und hergehende translatorische oder hin- und hergehende rotatorische Bewegung des Messerträgers umzuwandeln. Der Antriebsmotor ist insbesondere als Elektromotor ausgebildet. Der Antriebsmotor kann ein DC-Motor oder ein EC-Motor sein. Zwischen dem Antriebsmotor und dem Umwandlungsgetriebe ist in vielen Fällen ein Untersetzungsgetriebe angeordnet, das beispielsweise als Planetengetriebe ausgebildet sein kann, um eine vom Antriebsmotor bereitgestellte Nenndrehzahl zu reduzieren. Dadurch, dass im Stand der Technik verschiedene Übersetzungsverhältnisse bekannt sind, ist der absolute Wert der Positionierdrehzahl von dem Getriebe des Gartengeräts abhängig. Der Antriebsmotor kann von einem oder mehreren Akkumulatoren mit Energie versorgt werden. Es kann auch vorgesehen sein, dass der Antriebsmotor netzgespeist ist.

Durch Betätigen des Gashebels, also beispielsweise Verschieben oder Verschwenken des Gashebels, veranlasst eine Kontrolleinrichtung des Gartengeräts den Antriebsmotor zu betreiben. Es kann vorgesehen sein, dass die Kontrolleinrichtung den Antriebsmotor nur betreibt, wenn zusätzlich eine oder mehrere weitere Bedingungen erfüllt sind. Eine Bedingung kann beispielsweise eine aktivierte Zweihandschaltung sein. Eine aktivierte Zweihandschaltung bedeutet, dass neben dem Gashebel das andere Bedienelement, das von der zweiten Hand betätigt wird, betätigt ist. Die Kontrolleinrichtung ist insbesondere ausgebildet, eine Betätigung des Gashebels und, sofern vorhanden, des anderen Bedienelements zu erfassen. Die Kontrolleinrichtung ist ausgebildet, eine Betätigung des Gashebels zu erfassen. Der Gashebel kann derart ausgebildet sein, dass er lediglich ein betätigt-Signal bzw. unbetätigt-Signal an die Kontrolleinrichtung übergibt. Dies kann beispielsweise über einen Tasterschalter am Gashebel bzw. Bediengriff erfolgen. Der Gashebel kann auch ausgebildet sein, dass er neben einem betätigt-Signal bzw. unbetätigt-Signal zusätzlich Informationen zu einem Betätigungsgrad des Gashebels an die Kontrolleinrichtung übergibt. In vielen Fällen wird der Betätigungsgrad über ein Potentiometer oder eine Hallsensoranordnung erfasst. Der Betätigungsgrad gibt die Stellung des Gashebels innerhalb einer Betätigungsspanne des Gashebels von einem unbetätigten Zustand bis zu einem maximal betätigten Zustand an. Zwischen dem unbetätigten Zustand des Gashebels und dem maximal betätigten Zustand des Gashebels liegt eine Betätigungsspanne des Gashebels von 100%. Dem unbetätigten Zustand des Gashebels ist der Betätigungsgrad 0% zugeordnet, dem maximal betätigten Zustand des Gashebels ist der Betätigungsgrad 100% zugeordnet. Einer Zwischenstellung des Gashebels ist ein der Zwischenstellung entsprechender Betätigungsgrad zwischen 0% und 100%, exklusive 0% und 100%, zugeordnet. Das Gartengerät kann weitere Bedienelemente aufweisen, deren Betätigung von der Kontrolleinrichtung erfasst und bei einer Entscheidung zum Betrieb des Antriebsmotors und/oder der Wahl des Betriebsmodus berücksichtigt werden. Die Kontrolleinrichtung kann ausgebildet sein, weitere Betriebsparameter des Antriebsmotors auszuwerten. Die Kontrolleinrichtung kann eine Steuerungsplatine umfassen, insbesondere durch eine Steuerungsplatine gebildet sein. Die Kontrolleinrichtung kann ausgebildet sein, mittelbar oder unmittelbar mit mindestens einem Akkumulator zur Energieversorgung des Antriebsmotors verbunden zu sein.

In einer Ausführungsform ist die Kontrolleinrichtung dazu ausgebildet, den Positioniermodus durch eine Betätigung des Gashebels zu aktivieren, insbesondere, wenn die Kontrolleinrichtung erfasst, dass i) der Gashebel mit einem Betätigungsgrad betätigt wird, der kleiner gleich einem Grenzbetätigungsgrad ist, oder ii) der Gashebel in einem in der Kontrolleinrichtung abgespeicherten Betätigungsmuster betätigt wurde und der Gashebel innerhalb eines festgelegten Zeitglieds nach Ausführen des Betätigungsmusters betätigt wird oder iii) ein vom Gashebel verschiedenes Bedienelement, insbesondere in einem in der Kontrolleinrichtung abgespeicherten Betätigungsmuster, betätigt wurde und der Gashebel danach innerhalb eines festgelegten Zeitglieds betätigt wird. Die erste Option i) steht nur zur Verfügung, wenn die Kontrolleinrichtung Zwischenstellungen des Gashebels erfassen kann. Dies kann beispielsweise über einen Gashebel mit Potentiometer oder einer Hallsensor-Anordnung oder dergleichen Einrichtung realisiert sein. Der Grenzbetätigungsgrad ist in der Kontrolleinrichtung hinterlegt. Der Grenzbetätigungsgrad ist insbesondere aus einem Wertebereich von 10% Betätigungsgrad bis 50% Betätigungsgrad gewählt. Ein Grenzbetätigungsgrad von beispielsweise 10% bedeutet, dass der Positioniermodus von der Kontrolleinrichtung aktiviert wird, solange der Betätigungsgrad des Gashebels höchstens 10% beträgt. Die zweite Option ii) kann auch angewendet werden, wenn die Kontrolleinrichtung keine Zwischenstellungen des Gashebels erfassen kann. Hierfür ist vorgesehen, dass der Gashebel in einem Betätigungsmuster, beispielsweise nach Art eines Doppelklicks, betätigt wird und die Kontrolleinrichtung ausgebildet ist, das Betätigungsmuster zu erkennen. Erfolgt dann innerhalb des festgelegten Zeitglieds nochmals eine Betätigung des Gashebels, ist der Positioniermodus aktiviert. Es kann gemäß der dritten Option iii) auch vorgesehen sein der Kontrolleinrichtung über ein vom Gashebel verschiedenes Bedienelement mitzuteilen, dass der Positioniermodus gestartet werden soll und dies ausgeführt wird, sobald der Gashebel innerhalb des festgelegten Zeitraums nach dem Betätigen des vom Gashebel verschiedenen Bedienelements betätigt wird. Bei Vorhandensein einer Zweihandschaltung kann das vom Gashebel verschiedene Bedienelement das andere Bedienelement der Zweihandschaltung sein. Das vom Gashebel verschiedene Bedienelement kann insbesondere in einem Betätigungsmuster betätigt werden und auf diese Weise der Positioniermodus gestartet werden, wenn der Gashebel innerhalb des festgelegten Zeitraums nach dem Ausführen des Betätigungsmusters betätigt wird.

In einer Ausführungsform ist die Kontrolleinrichtung dazu ausgebildet, den Positioniermodus zu deaktivieren, wenn die Kontrolleinrichtung erkennt, dass der Gashebel losgelassen wurde. Das Gartengerät ist derart ausgebildet, dass weder der Positioniermodus noch der Arbeitsmodus aktiv sein kann, wenn der Gashebel unbetätigt ist. Auf diese Weise ist sichergestellt, dass eine Bewegung des mindestens einen Messerträgers nur dann erfolgt, wenn der Bediener dies durch Betätigung des Gashebels zum Ausdruck bringt. Die Bedienung des Gartengeräts ist dadurch besonders einfach und intuitiv. Bei Vorhandensein einer Zweihandschaltung kann auch vorgesehen sein, dass die Kontrolleinrichtung bei Erkennen des Loslassens des anderen Bedienelements der Zweihandschaltung eine Deaktivierung des Positioniermodus darauf basierend vornimmt.

Dadurch, dass der Gashebel im Positioniermodus dauerhaft gehalten wird, kann das Gartengerät auf einfache Weise von dem Positioniermodus in den Arbeitsmodus wechseln, wenn der Bediener den Gashebel lediglich noch stärker betätigt. Eine stärkere Betätigung entspricht einem größeren Betätigungsgrad. Der Positioniermodus kann demnach unmittelbar in den Arbeitsmodus übergehen. Unmittelbar heißt in diesem Zusammenhang, dass der Antriebsmotor weder zwischenzeitlich ausgeschaltet wird noch seine Drehrichtung ändert, sondern lediglich schneller dreht. In einer Ausführungsform ist die Kontrolleinrichtung ausgebildet, den Positioniermodus zu deaktivieren, wenn die Kontrolleinrichtung erkennt, dass der Betätigungsgrad des Gashebels den Grenzbetätigungsgrad des Gashebels überschritten hat und/oder sich der Betätigungsgrad des Gashebels um mindestens eine Grenzbetätigungsspanne des Gashebels erhöht hat. Der Grenzbetätigungsgrad ist in der Kontrolleinrichtung hinterlegt. Der Grenzbetätigungsgrad ist insbesondere aus einem Wertebereich von 10% Betätigungsgrad bis 50% Betätigungsgrad gewählt. Ein Grenzbetätigungsgrad von beispielsweise 10% heißt, dass der Positioniermodus beendet wird, wenn der Betätigungsgrad des Gashebels 10% überschreitet. Die Grenzbetätigungsspanne ist in der Kontrolleinrichtung hinterlegt. Die Grenzbetätigungsspanne ist ein Abschnitt der Betätigungsspanne. Die Grenzbetätigungspanne beträgt insbesondere zwischen 10% und 50% der Betätigungsspanne. Die Grenzbetätigungsspanne von beispielsweise 20% heißt, dass der Positioniermodus beendet wird, wenn sich die der Betätigungsgrad des Gashebels von beispielsweise 5% auf 25%, also um mindestens 20% der Betätigungsspanne des Gashebel, geändert hat. Es kann eine Hysterese zur Aktivierung bzw. Deaktivierung des Positioniermodus hinterlegt sein, wonach der Positioniermodus beispielsweise aktiviert wird, wenn der Betätigungsgrad zwischen 1% und 10% beträgt, und der Positioniermodus deaktiviert wird, wenn der Betätigungsgrad beispielsweise 20% überschreitet. Eine geringfügige Erhöhung des Betätigungsgrads um weniger als 10% führt damit nicht zu einem Übergang in den Arbeitsmodus. Durch die Hysterese kann der Gashebels nach Aktivierung des Positioniermodus geringfügig über den Betätigungsgrad von 10% bewegt werden, ohne dass unbeabsichtigt der Arbeitsmodus startet. Insbesondere ist das Gartengerät derart ausgebildet, dass es erst bei einer Erhöhung des Betätigungsgrads um mindestens die Grenzbetätigungsspanne unmittelbar von dem Positioniermodus in den Arbeitsmodus übergeht. Zu dem Zeitpunkt, an dem der Positioniermodus in den Arbeitsmodus übergeht ist der Positioniermodus beendet, also deaktiviert.

Im Positioniermodus ist die thermische Belastung des Antriebsmotor aufgrund einer reduzierten Kühlleistung erhöht. Der Positioniermodus sollte daher nur temporär und nicht dauerhaft genutzt werden. Durch die stark reduzierte Geschwindigkeit des mindestens einen angetriebenen Messerträger ist der Positioniermodus nicht zum Schneiden von Pflanzen und dergleichen vorgesehen. Der Positioniermodus dient dazu, den mindestens einen Messerträger gezielt in eine relative Position zu einem weiteren Messerträger zu bringen, um den mindestens einen angetriebenen Messerträger im an dem Gartengerät montierten Zustand einfach warten, insbesondere nachschärfen, zu können. In einer Ausführungsform ist die Kontrolleinrichtung ausgebildet, den Positioniermodus zu deaktivieren, wenn die Kontrolleinrichtung erkennt, dass eine Positionierzeitspanne, die seit einer Aktivierung des aktuellen Positioniermodus vergangen ist, größer ist als eine in der Kontrolleinrichtung hinterlegte maximale Positionierzeitspanne. Die maximale Positionierzeitspanne beträgt höchstens eine Minute, insbesondere höchstens 30 Sekunden, ganz insbesondere höchstens 15 Sekunden. Es kann vorgesehen sein, dass die maximale Positionierzeitspanne von der Kontrolleinrichtung reduziert wird, wenn die Kontrolleinrichtung feststellt, dass innerhalb eines definierten Zeitbereichs die Summe aller in dem Zeitbereich liegenden Positionierzeitspannen einen Grenzwert überschreitet und/oder eine überwachte Temperatur des Antriebsmotors einen Temperaturgrenzwert überschreitet. Nachdem das Gartengerät einmal, insbesondere für eine dritte Haltedauer, im Arbeitsmodus betrieben wurde, kann ein neuer Zeitbereich beginnen, in dem die vorherigen Positionierzeitspannen nicht mehr aufsummiert werden.

Es kann vorgesehen sein, dass die Kontrolleinrichtung nur eine der vier vorgenannten Bedingungen zur Deaktivierung des Positioniermodus überwacht und den Positioniermodus deaktiviert sobald diese einzige Bedingung, insbesondere das Loslassen des Gashebels, zur Deaktivierung des Positioniermodus erfüllt ist. Es kann vorgesehen sein, dass die Kontrolleinrichtung mindestens zwei der vier vorgenannten Bedingungen zur Deaktivierung des Positioniermodus überwacht und den Positioniermodus deaktiviert so bald eine einzige dieser Bedingungen zur Deaktivierung des Positioniermodus erfüllt ist. Es kann vorgesehen sein, dass die Kontrolleinrichtung mindestens zwei der vier vorgenannten Bedingungen zur Deaktivierung des Positioniermodus überwacht und den Positioniermodus deaktiviert so bald mindestens zwei dieser Bedingungen zur Deaktivierung des Positioniermodus erfüllt sind.

Wenn sich das Gartengerät im Arbeitsmodus befindet, ist die maximal zulässige Drehzahl des Antriebsmotors üblicherweise dessen Nenndrehzahl. Die Nenndrehzahl liegt in vielen Fällen, je nach verwendetem Antriebsmotor, zwischen 15.000 und 40.000 Umdrehungen pro Minute. Die Nenndrehzahl kann durch ein Untersetzungsgetriebe reduziert werden, sodass sich eine reduzierte Drehzahl am Umwandlungsgetriebe ergibt. Das Umwandlungsgetriebe weist in vielen Fällen, je nach eingesetztem Antriebsmotor und eingesetztem Untersetzungsgetriebe, eine reduzierte Drehzahl zwischen 2.500 und 6.000 Umdrehungen pro Minute auf, dies entspricht 40 bis 100 Umdrehungen pro Sekunde. Pro Umdrehung des Umwandlungsgetriebes wird der Messerträger einmal hin und einmal her bewegt, sprich ein Doppelhub ausgeführt. Der Messerträger führt demnach im Arbeitsmodus 40 bis 100 Doppelhübe pro Sekunde aus. Der Begriff Doppelhub bezeichnet hierbei sowohl eine translatorische hin- und her- Bewegung als auch eine rotatorische hin- und her- Bewegung. In einer Ausführungsform ist die Kontrolleinrichtung ausgebildet, die Drehzahl des Antriebsmotors im Positioniermodus und bei durchgängig betätigtem Gashebel derart zu steuern, dass die Drehzahl des Antriebsmotors innerhalb eines ersten Drehzahlbereichs liegt, wobei der erste Drehzahlbereich von Null Umdrehungen pro Minute bis zu einer Positionierdrehzahl reicht, wobei die Positionierdrehzahl höchstens 2% der Nenndrehzahl des Antriebsmotors entspricht.

Im Positioniermodus ist die maximal zulässige Drehzahl des Antriebsmotors die Positionierdrehzahl. Die Positionierdrehzahl kann beispielsweise zwischen 0,5% und 2% der Nenndrehzahl des eingesetzten Antriebsmotors betragen. Im Positioniermodus werden pro Zeiteinheit nur maximal 0,5% bis 2% der Anzahl an Doppelhüben des Arbeitsmodus ausgeführt. Je nach Drehzahl des Umwandlungsgetriebe sind dies bei einer Drehzahl des Umwandlungsgetriebes von 2.500 Umdrehungen pro Minute höchstens 0,2 bis 0,8 Doppelhübe pro Sekunde und bei einer Drehzahl des Umwandlungsgetriebes von 6.000 Umdrehungen pro Minute höchstens 0,5 bis 2 Doppelhübe pro Sekunde.

In einer Ausführungsform ist die Kontrolleinrichtung dazu ausgebildet, im Positioniermodus die Drehzahl des Antriebsmotors konstant auf der gleichen Drehzahl, insbesondere der Positionierdrehzahl, für eine erste Haltedauer zu halten. Der mindestens eine Messerträger bewegt sich entsprechend mit gegenüber dem Arbeitsmodus reduzierter Geschwindigkeit innerhalb der ersten Haltedauer kontinuierlich hin und her. Durch Loslassen des Gashebels und/oder des ggf. vorhandenen anderen Bedienelements kann der Antriebsmotor, und folglich der Messerträger, in der aktuellen Position gestoppt werden.

Alternativ oder ergänzend ist in einer Ausführungsform vorgesehen, dass die Kontrolleinrichtung dazu ausgebildet ist, im Positioniermodus die Drehzahl des Antriebsmotor alternierend zu steuern, insbesondere zu erhöhen und zu erniedrigen. Insbesondere wird die Drehzahl des Antriebsmotors zyklisch auf null Umdrehungen pro Minute gesetzt. Die Drehzahl kann beispielsweise einen sägezahnförmigen Verlauf aufweisen. Das heißt die Drehzahl kann kontinuierlich auf Positionierdrehzahl ansteigen und nach Erreichen der Positionierdrehzahl abrupt auf Drehzahl Null abfallen. Die Drehzahl kann nach Erreichen der Positionierdrehzahl auch noch für eine Haltedauer gehalten werden, bevor sie auf null abfällt. Das Abfallen von der Positionierdrehzahl auf null kann auch allmälich erfolgen. Es kann auch vorgesehen sein, dass die Drehzahl einen sinusförmigen Verlauf aufweist. Der sinusförmige Verlauf kann um die halbe Positionierdrehzahl verlaufen. Es kann auch vorgesehen sein, dass die Drehzahl einen sinusförmigen Verlauf um die Drehzahl Null aufweist, d.h. sich während des Positioniermodus die Drehrichtung des Antriebsmotors ändert. Der Zyklus aus Drehzahlanstieg und Drehzahlabfall wiederholt sich, solange der Gashebel betätigt ist. In einer Ausführungsform ist die Kontrolleinrichtung dazu ausgebildet, die Drehzahl nach ihrem Abfall auf null für eine zweite Haltedauer konstant auf null zu halten, bevor die Drehzahl erneut ansteigt. Der Antriebsmotor bleibt demnach während des Positioniermodus zyklisch für eine zweite Haltedauer stehen. Die zweite Haltedauer ermöglicht dem Bediener die beim Stopp des Antriebsmotors erreichte Position des Messerträgers auszuwählen, in dem er einfach den Gashebel loslässt. Die zweite Haltedauer beträgt insbesondere zwischen 0,5 und 2 Sekunden. Aufgrund des Stillstands des mindestens einen angetriebenen Messerträgers kann der Bediener die relative Ausrichtung der Messerträger noch besser sehen und noch einfacher beurteilen, ob diese Ausrichtung der Messerträgers für die Wartung geeignet ist und beibehalten werden soll.

In einer Ausführungsform ist das Gartengerät derart ausgebildet, dass der mindestens eine angetriebene Messerträger bei jedem Stopp des Antriebsmotors in einer anderen relativen Lage zu dem zweiten Messerträger stoppt. Dadurch werden dem Bediener verschiedene Ausrichtungen der Messerträger zueinander zur Auswahl geboten. Um dies zu erreichen ist die Anzahl der innerhalb eines Zyklus ausgeführten Umdrehungen des Antriebsmotors auf die Anzahl der für einen Doppelhub erforderlichen Umdrehungen des Antriebsmotors abgestimmt. Dadurch, dass sich der Antriebsmotor zwischen aufeinander folgenden Stopps, also innerhalb eines Zyklus, nicht genau so oft oder um ein Vielfaches davon dreht, wie genau eine Hin- und Her-Bewegung des Messerträgers erfordern würde, wird vermieden, dass der Messerträger bei jedem Stopp des Antriebsmotors in der gleichen Position zum Stillstand kommt. Dadurch, dass die Anzahl an Umdrehungen, die genau eine Hin- und Her-Bewegung des Messerträgers erfordern würde, kein Vielfaches der Anzahl an Umdrehungen ist, die zwischen aufeinanderfolgenden Stopps, also innerhalb eines Zyklus, liegen, wiederholt sich die exakte Position des Messerträgers nicht automatisch nach wenigen Zyklen, die dem Vielfachen entsprechen würden, wieder. Dadurch wird erreicht, dass den aufeinanderfolgenden Stopps des Antriebsmotors zahlreiche verschiedene Positionen des Messerträgers zugeordnet sind, aus denen der Bediener eine Position auswählen kann.

Weitere Merkmale der Erfindung ergeben sich aus der Beschreibung und der Zeichnung, in der nachstehend im Einzelnen beschriebene Ausführungsbeispiele der Erfindung wiedergegeben sind. Es zeigen:

Fig. 1    eine schematische Darstellung des erfindungsgemäßen handgehaltenen Gartengeräts hier in einer beispielhaften Ausführungsform als Heckenschere,

Fig. 2    eine Detailansicht im Bereich des Gashebels des handgehaltenen Gartengeräts aus Fig. 1 gemäß dem Detail Y in Fig. 1,

Fig. 3    ein erster beispielhafter zeitlicher Verlauf des Betätigungsgrads des Gashebels des handgehaltenen Gartengeräts ohne erfassbare Zwischenzustände des Gashebels und der sich daraus ergebenden Aktivierung bzw. Deaktivierung von Positioniermodus, Arbeitsmodus und dem zeitlichen Verlauf der Drehzahl des Antriebsmotors,

Fig. 4    ein Diagramm gemäß Fig. 3, wobei die Kontrolleinrichtung die Drehzahl im Positioniermodus alternierend steuert,

Fig. 5    ein zweiter beispielhafter zeitlicher Verlauf des Betätigungsgrads des Gashebels des handgehaltenen Gartengeräts mit erfassbaren Zwischenzuständen des Gashebels und der sich daraus ergebenden Aktivierung bzw. Deaktivierung von Positioniermodus, Arbeitsmodus und dem zeitlichen Verlauf der Drehzahl des Antriebsmotors,

Fig. 6    ein Diagramm gemäß Fig. 5, wobei die Kontrolleinrichtung die Drehzahl im Positioniermodus alternierend steuert,

Fig. 7    eine Detailansicht der Schneidvorrichtung des handgehaltenen Gartengeräts aus Fig. 1 gemäß dem Detail Z in Fig. 1.

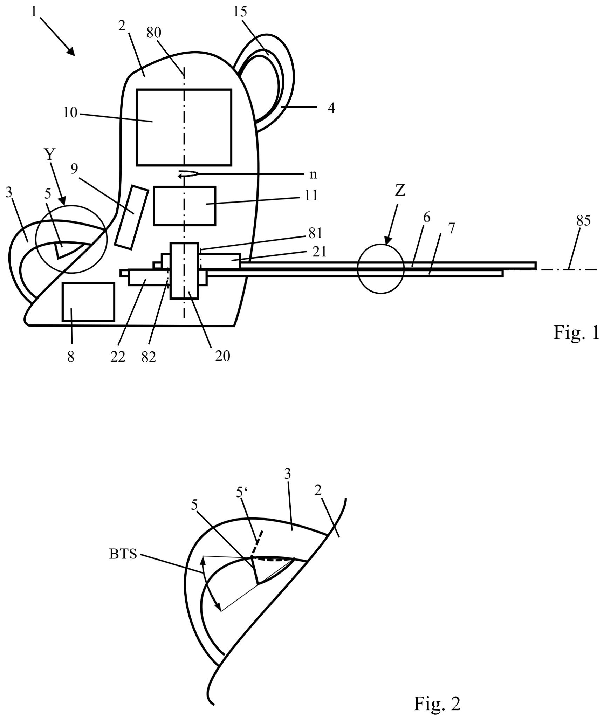

Fig. 1 zeigt ein handgehaltenes Gartengerät 1 in einer beispielhaften Ausführung als Heckenschere. Das Gartengerät 1 weist ein Gehäuse 2 auf. An dem Gehäuse 2 sind ein erster Handgriff 3 und ein zweiter Handgriff 4 angeordnet. An dem ersten Handgriff 3 ist ein Gashebel 5 zur mittelbaren Steuerung des Antriebsmotors 10 über eine Kontrolleinrichtung 9 angeordnet.

An dem zweiten Handgriff 4 kann ein anderes Bedienelement 15 angeordnet sein, dass gemeinsam mit dem Gashebel 5 eine Zweihandschaltung bildet. Der Antriebsmotor 10 wird über einen Akkupack 8 mit Strom versorgt. Der Akkupack 8 kann in oder an dem Gehäuse 2 werkzeuglos wechselbar angeordnet sein. Der Antriebsmotor 10 rotiert um eine Motorachse 80 mit einer Drehzahl n. Der Antriebsmotor 10 treibt im Ausführungsbeispiel ein Untersetzungsgetriebe 11 an, das als Planetengetriebe ausgebildet ist. Das Untersetzungsgetriebe 11 treibt ein Umwandlungsgetriebe an. Im Ausführungsbeispiel ist das Umwandlungsgetriebe als Exzentergetriebe ausgeführt, bei dem eine Exzenterwelle 20 von dem Untersetzungsgetriebe 11 angetrieben ist. An der Exzenterwelle 20 sind ein erster Exzenter 21 mit einer ersten Exzenterachse 81 und ein zweiter Exzenter 22 mit einer zweiten Exzenterachse 82 angeordnet über die ein erster Messerträger 6 und ein zweiter Messerträger 7 in bekannter Form gegensätzlich zueinander hin- und hergehend angetrieben sind. Die Messerträger 6, 7 bewegen sich in einer Längsrichtung 85 gegensätzlich zueinander. Es kann alternativ auch vorgesehen sein, die Messerträger 6, 7 über Pleuel anzutreiben, die auf den Exzentern 21, 22, gelagert sind. Es kann auch vorgesehen sein, dass nur einer der Messerträger 6,7 angetrieben ist.

Der erste Handgriff 3 ist in Fig. 2 mit zwei verschiedenen Stellungen des Gashebels 5, 5' dargestellt. In der ersten Stellung ist der Gashebel 5 in einer unbetätigten Stellung, also bei einem Betätigungsgrad von 0% gezeigt. In der zweiten Stellung ist der Gashebel 5' in einer vollständig betätigten Stellung, also bei einem Betätigungsgrad von 100%, mit gestrichelter Linie dargestellt. Zwischen der unbetätigten Stellung und der vollständig betätigten Stellung des Gashebels 5 erstreckt sich eine Betätigungsspanne BTS des Gashebels 5.

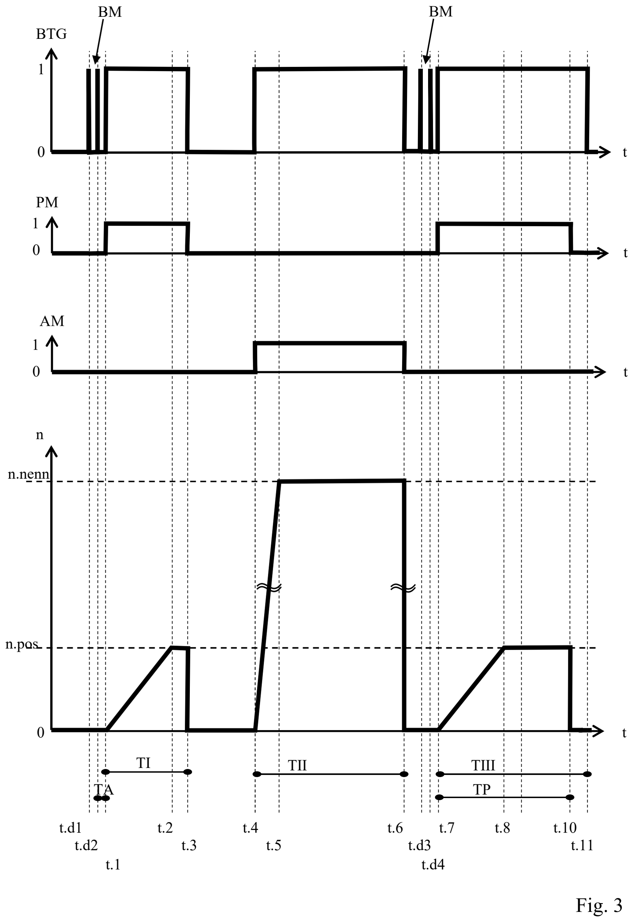

Fig. 3 zeigt einen ersten beispielhaften Verlauf des Betätigungsgrads BTG des Gashebels 5 des handgehaltenen Gartengeräts 1 ohne erfassbare Zwischenzustände des Gashebels 5 und der sich daraus ergebenden Aktivierung bzw. Deaktivierung von Positioniermodus PM, Arbeitsmodus AM und der Drehzahl n des Antriebsmotors 10 über die Zeit t. Der Zustand "0" im PM(t) bzw. AM(t) Diagramm bezeichnet einen deaktivierten Zustand. Der Zustand "1" im PM(t) bzw. AM(t) Diagramm bezeichnet einen aktivierten Zustand. Innerhalb eines ersten Zeitintervalls TI vom Zeitpunkt t.1 bis t.3, innerhalb eines zweiten Zeitintervalls TII vom Zeitpunkt t4 bis t6 und innerhalb eines dritten Zeitintervalls TIII, vom Zeitpunkt t7 bis t11, wird der Gashebel 5 jeweils durchgängig betätigt, d.h. der Betätigungsgrad BTG beträgt durchgängig 100%. Sowohl dem ersten Zeitintervall TI als auch dem dritten Zeitintervall TIII ist ein Betätigungsmuster BM des Gashebels 5 vorgeschaltet. Das Betätigungsmuster BM ist im Ausführungsbeispiel in Form eines Doppelklicks zum Zeitpunkt t.d1, t.d2 bzw. t.d3, t.d4 ausgeführt. Durch nochmalige Betätigung des Gashebels 5 zum Zeitpunkt t.1 bzw. t.7 wird der Positioniermodus PM aktiviert und aufrechterhalten solange der Gashebel 5 betätigt ist. Ein Zeitglied TA zwischen dem Betätigungsmuster BM und der nochmaligen Betätigung des Gashebels 5 beträgt insbesondere höchstens eine Sekunde. Wird der Gashebel 5 nach Ausführen des Betätigungsmusters BM erst nach Ablauf des Zeitglieds TA betätigt, so wird der Arbeitsmodus AM aktiviert. Aufeinanderfolgende Betätigungen des Gashebels 5 während des Betätigungsmusters BM liegen insbesondere höchstens um das Zeitglied TA, insbesondere weniger als eine Sekunde, ganz insbesondere höchstens 0,5 Sekunden auseinander. Nach Erkennen des Betätigungsmusters BM wird die Drehzahl n des Antriebsmotors 10 von der Kontrolleinrichtung 9 auf eine Positionierdrehzahl n.pos begrenzt. Die Positionierdrehzahl n.pos beträgt höchstens 2% der Nenndrehzahl n.nenn des Antriebsmotors 10. Zur besseren Darstellbarkeit ist der Drehzahlverlauf n(t) im Arbeitsmodus AM komprimiert dargestellt. Die Kontrolleinrichtung 9 reduziert im Positioniermodus PM zweckmäßig eine positive Beschleunigung des Antriebsmotors 10. Dies ist durch den flacheren Anstieg der Drehzahlkurve im Zeitintervall t.1 bis t.2 gegenüber dem Zeitintervall t.4 bis t.5 sichtbar. Nach Erreichen der Positionierdrehzahl n.pos wird diese über eine Haltedauer, hier von t.2 bis t.3 bzw. von t.8 bis t.10, konstant gehalten.

Wie beispielhaft zum Zeitpunkt t.10 gezeigt, kann es vorgesehen sein, dass der Positioniermodus PM trotz betätigtem Gashebel 5 von der Kontrolleinrichtung 9 beendet wird. Auslöser hierfür kann sein, dass der Antriebsmotor 10 eine Temperatur über einem zulässigen Grenzwert überschritten hat oder der Positioniermodus PM für eine Positionierzeitspanne TP aktiv ist, die eine in der Kontrolleinrichtung 9 hinterlegte maximale Positionierzeitspanne überschritten hat oder eine Anzahl an Umdrehungen des Antriebsmotors 10 einen vorgegebenen Grenzwert überschritten hat. Die Fläche unter der Drehzahlkurve entspricht der Anzahl x an Umdrehungen des Antriebsmotors 10 im betrachteten Zeitraum. Zum Zeitpunkt t.3 war keines dieser für sich einzelnen Abbruchkriterien erfüllt und der Positioniermodus PM wurde durch Loslassen des Gashebels 5 beendet. Durch Loslassen des Gashebels 5 zum Zeitpunkt t.3 hat der Bediener die zu diesem Zeitpunkt vorliegende Ausrichtung der Messerträger 6 zueinander ausgewählt.

Im Ausführungsbeispiel ist zur Vereinfachung lediglich beschrieben, dass der Gashebel 5 losgelassen wird. Bei Vorhandensein einer Zweihandschaltung, kann es auch vorgesehen sein, dass der Bediener anstelle des Gashebels 5 das andere Bedienelement 15 der Zweihandschaltung loslässt, um die Position des mindestens einen Messerträgers 6,7 auszuwählen.

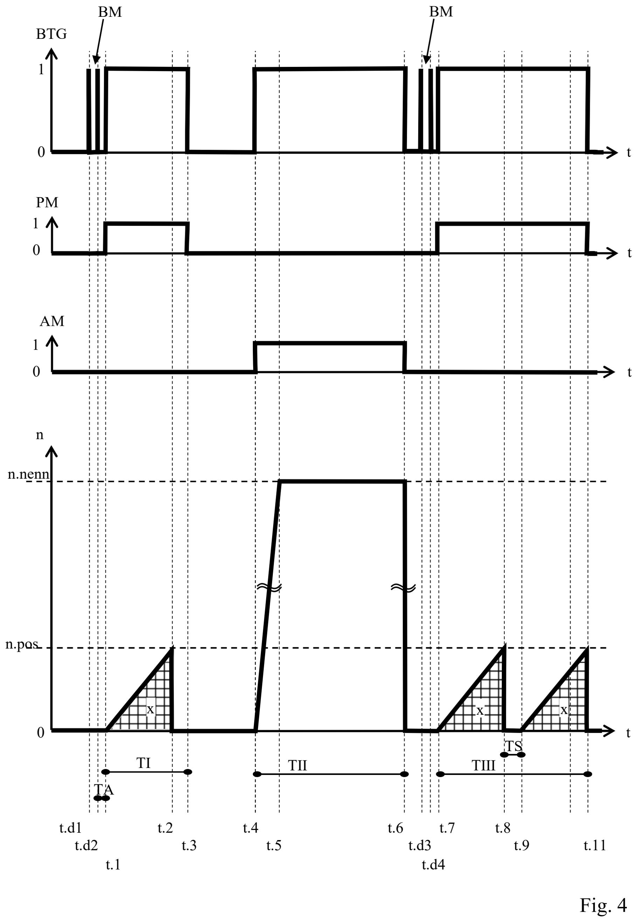

Die in Fig. 4 gezeigten Diagramme entsprechen im Wesentlichen denen in Fig. 3, weshalb nachfolgend nur die Unterschiede beschrieben werden und ansonsten auf die vorherige Beschreibung zu Fig. 3 verwiesen wird. Im Gegensatz zu Fig. 3 ist bei Fig. 4 im Positioniermodus PM ein alternierend von der Kontrolleinrichtung 9 gesteuerter Drehzahlverlauf n(t) gezeigt. Die Drehzahl n nimmt hierbei Werte zwischen Null und der Positionierdrehzahl n.pos an. Das heißt die Kontrolleinrichtung 9 steuert den Antriebsmotor 10 derart, dass der Antriebsmotor 10 im Positioniermodus PM trotz betätigtem Gashebel 5 zwischenzeitlich stehen bleibt. Der Antriebsmotor 10 kann wie dargestellt zum Zeitpunkt t.2 oder t.8, also unmittelbar nach Erreichen der Positionierdrehzahl n.pos, temporär abgestellt werden. Es kann alternativ auch vorgesehen sein, dass die Drehzahl n des Antriebsmotors 10 noch für eine definierte Zeit auf Positionierdrehzahl n.pos konstant gehalten wird, bevor die Kontrolleinrichtung 9 den Antriebsmotor 10 temporär abstellt.

Der alternierende Drehzahlverlauf ist insbesondere so abgestimmt, dass der Antriebsmotor 10 eine definierte Anzahl an Umdrehungen x zwischen dem Start eines Zyklus, hier zum Zeitpunkt t.1 oder t.7 oder t.9, und dem Ende des Zyklus, hier zum Zeitpunkt t.2 bzw. t.8 bzw. t.11, absolviert hat. Die Fläche unter der Drehzahlkurve gibt die Anzahl der Umdrehungen x des Antriebsmotors 10 im Zeitintervall an. Die Positionierdrehzahl n.pos und/oder die Dauer des Zyklus sind insbesondere so abgestimmt, dass die Anzahl x an Umdrehungen im Zyklus nicht einer Anzahl y an Umdrehungen, oder einem Vielfachen davon, entspricht, die der Antriebsmotor 10 für genau eine Hin- und Her-Bewegung der Messerträger 6, 7 benötigt. Auf diese Weise wird vermieden, dass die Messer der Messerträger 6, 7 bei jedem Stopp des Antriebsmotors 10 in der gleichen relativen Ausrichtung zueinander zum Stillstand kommen. Die Anzahl x kann beispielsweise auf

$$x = (y/p) + y*f, \text{ wobei } 3 \leq p \leq 10 \text{ und } f = [0, 1, 2, 3, 4, 5]$$

festgelegt sein. Der Parameter p beträgt höchstens zehn, damit die Messerträger 6,7 und damit die Messer in jedem Zyklus um einen Mindestweg verfahren. Der Parameter p beträgt mindestens drei, damit dem Bediener mehrere Ausrichtungen der Messerträger 6, 7 zum Nachschärfen angeboten werden. Die Anzahl x an Umdrehungen des Antriebsmotors 10 im Zyklus kann alternativ oder zusätzlich so abgestimmt sein, dass die Anzahl y kein Vielfaches der Anzahl x ist. D.h. der Parameter p kann eine rationale Zahl sein. Auf diese Weise werden dem Bediener mehr Ausrichtungen der Messerträger 6,7 zueinander zur Auswahl gestellt.

In Fig. 4 wird zum Zeitpunkt t.3 der Gashebel 5 losgelassen. Da die Zeitspanne zwischen t.3 und t.2 kleiner als eine in der Kontrolleinrichtung 9 hinterlegte zweite Haltedauer TS war, erfolgte zwischenzeitlich kein Wiederstart des Antriebsmotors 10. Mit Loslassen des Gashebels 5 zum Zeitpunkt t.3 wurde der Positioniermodus PM beendet und die bereits zum Zeitpunkt t.2 erreichte Ausrichtung der Messerträger 6 wurde beibehalten. Durch Loslassen des Gashebels 5 zum Zeitpunkt t.3 wurde die Ausrichtung der Messerträger 6 vom Bediener ausgewählt. Im Gegensatz dazu wurde der Gashebel 5 während der Zeitspanne zwischen t.8 und t.9 nicht losgelassen und die damit zum Zeitpunkt t.8 erreichte Ausrichtung gerade nicht ausgewählt.

Der vom Zeitpunkt t.7 bis t.11 reichende Positioniermodus PM weist einen vollständigen Zyklus vom Zeitpunkt t.7 bis t.8 auf. Die Drehzahl n wird für eine zweite Haltedauer TS, die vom Zeitpunkt t.8 bis t.9 reicht, auf Null gehalten, bevor zum Zeitpunkt t.9 ein neuer Zyklus beginnt. Durch Loslassen des Gashebels 5 zum Zeitpunkt t.11 wird der Positioniermodus PM beendet, bevor die Positionierdrehzahl n.pos erreicht ist. Im Gegensatz zu dem Drehzahlverlauf aus Fig. 3 wird der Positioniermodus PM in Fig. 4 nicht vorzeitig durch Erreichen eines in der Kontrolleinrichtung 9 gespeicherten Grenzwerts beendet. Dies soll veranschaulichen, dass beispielsweise das Integral der Drehzahlkurve, also die Anzahl x der im Zeitraum erfolgten Umdrehungen des Antriebsmotors 10, ein Abschaltkriterium darstellen kann, dass im Drehzahlverlauf nach Fig. 3 im Zeitraum t.7 bis t.10 erreicht wurde und im Drehzahlverlauf nach Fig. 4 im Zeitraum t.7 bis t.11 noch nicht erreicht wurde.

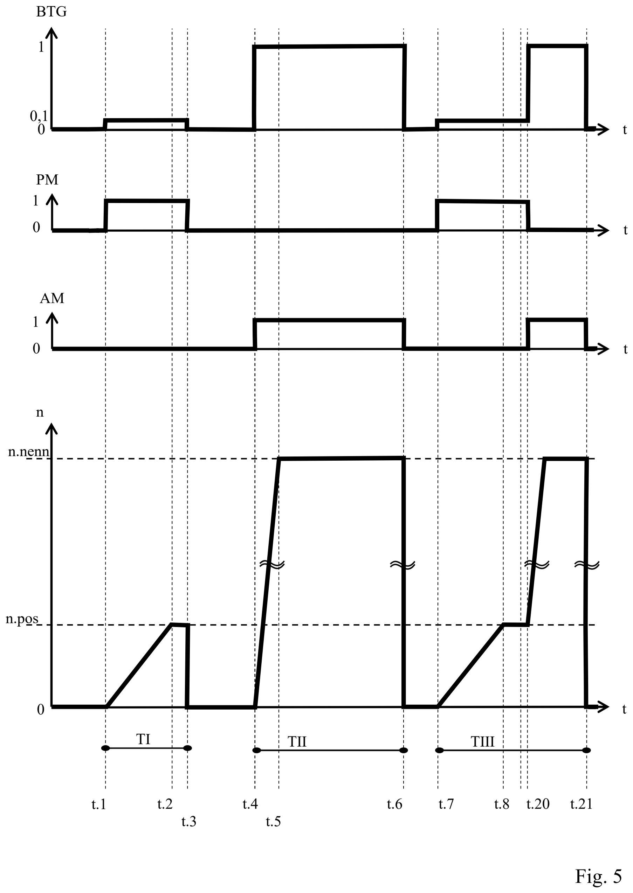

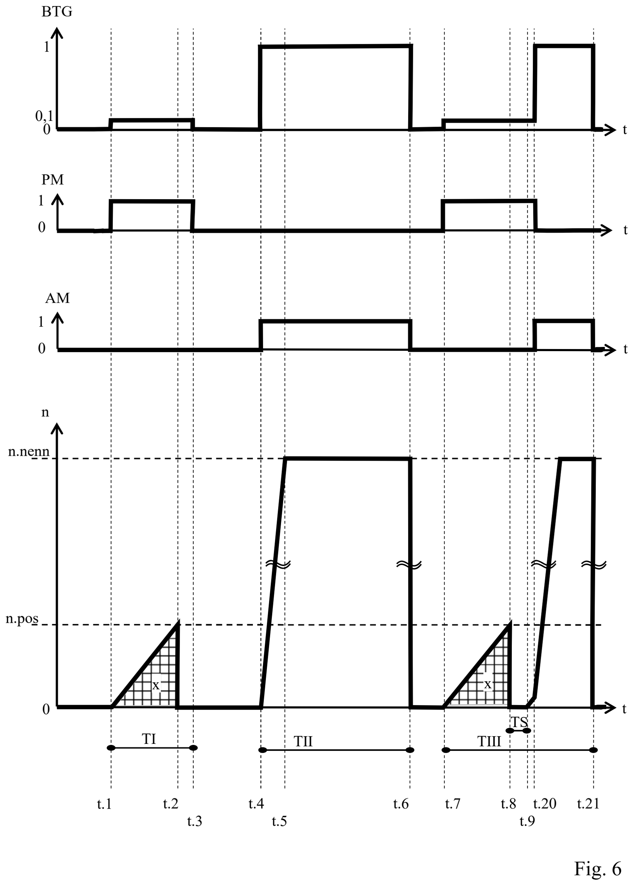

Die Fig. 5 bzw. 6 zeigen Diagramme, die im Großteil denen aus Fig. 3 bzw. 4 entsprechen, weshalb nachfolgend nur die Unterschiede beschrieben werden und ansonsten auf die vorherige Beschreibung zu den Fig. 3 und 4 verwiesen wird. Die zu den Fig. 5 und 6 zugehörige Ausführungsform unterscheidet sich von der zu den Fig. 3 und 4 zugehörige Ausführungsform darin, dass der Gashebel 5 von der Kontrolleinrichtung 9 detektierbare Zwischenzustände aufweist. Auf diese Weise kann eine Aktivierung des Positioniermodus PM nun gemäß der Fig. 5 und 6 durch eine Betätigung des Gashebels 5 mit einem Betätigungsgrad BTG von höchstens 10% erfolgen. Ein Betätigungsmuster BM, wie in Fig. 3 und 3 beschrieben, kann dadurch entfallen. Eine Betätigung des Gashebels 5 zum Zeitpunkt t.1 bzw. t.7 mit einem Betätigungsgrad BTG von 10% aktiviert den Positioniermodus PM. Dadurch, dass der Betätigungsgrad BTG von der Kontrolleinrichtung 9 detektierbar ist, kann durch stärkeres Betätigen des Gashebels 5, insbesondere eine Zunahme um mindestens 10% der Betätigungsspanne BTS, direkt von dem Positioniermodus PM in den Arbeitsmodus AM übergegangen werden, wie beispielhaft zum Zeitpunkt t.20 gezeigt. Das dritte Zeitintervall TIII, in dem der Gashebel 5 durchgängig betätigt ist, beginnt ebenfalls zum Zeitpunkt t.7 und endet zum Zeitpunkt t.21. Im dritten Zeitintervall geht der Positioniermodus unmittelbar in den Arbeitsmodus über. In Fig. 5 erhöht sich die Drehzahl n hierbei direkt ausgehend von der bereits erreichten Positionierdrehzahl n.pos. In Fig. 6 startete zum Zeitpunkt t.9 ein neuer alternierender Drehzahl Zyklus. Zum Zeitpunkt t.20 war der Antriebsmotor 10 noch in der Beschleunigung auf Positionierdrehzahl n.pos und wurde von der Kontrolleinrichtung 9 aufgrund der Aktivierung des Arbeitsmodus AM zu einer stärkeren Beschleunigung veranlasst. Zum Zeitpunkt t.21 wurde der Arbeitsmodus AM durch Loslassen des Gashebels 5 deaktiviert. Der Anstieg der Drehzahl n ist ein Maß für die Beschleunigung. In allen Fig. 3 bis 6 ist vorgesehen, dass der Antriebsmotor 10 im Positioniermodus PM langsamer beschleunigt als im Arbeitsmodus AM.

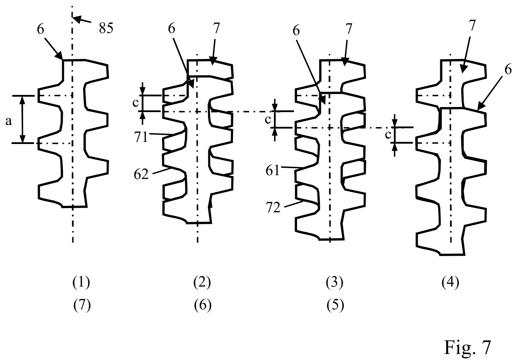

In Fig. 7 ist ein Ausschnitt des Gartengeräts 1 aus Fig. 1 im Bereich des ersten Messerträgers 6 und des zweiten Messerträgers 7 schematisch dargestellt. Die Messerträger 6, 7 sind hierbei in beispielhaften Ausrichtungen (1) bis (7) zueinander gezeigt, die sich bei einer alternierenden Steuerung des Drehzahlverlaufs durch die Kontrolleinrichtung 9 in aufeinander folgenden Zyklen jeweils bei Drehzahl Null nacheinander eingestellt haben. Wie zu erkennen ist, ist die Anzahl x der Umdrehungen des Antriebsmotors 10 pro Zyklus so abgestimmt, dass dies nur ca. 1/6, der Anzahl y der Umdrehungen pro Doppelhub entspricht. Die Messerträger 6, 7 führen demnach im Positioniermodus PM bei alternierender Steuerung von einem Stopp zum nächsten Stopp nur eine Verschiebung c von circa 1/3 eines Hubs bzw. circa 1/6 eines Doppelhubs aus. Die Länge eines Hubs entspricht dem Abstand a benachbarter Messer. Der Abstand a benachbarter Messer beträgt bei gegenläufig angetriebenen Messerträgern 6, 7 das doppelte einer Exzentrizität der Exzenter 21, 22, bei nur einem angetriebenen Messerträger 6, 7 die einfache Exzentrizität. Dadurch, dass sich die Messerträger 6, 7 und damit die Messer von einem zum nächsten Zyklus um einen vordefinierten Versatz c verschieben, ist für den Bediener nachvollziehbar, wann bei aktiviertem Positioniermodus PM welche Ausrichtung automatisch erzielt wird. Dadurch kann der Bediener beim Stopp der Messerträger in der zweiten Ausrichtung den Gashebel 5 loslassen und die rückseitigen Kanten 62 der Messer des ersten Messerträgers 6 und die vorderseitigen Kanten 71 der Messer des zweiten Messerträgers 6 schärfen. Bei erneuter Aktivierung des Positioniermodus, beispielsweise durch Betätigen des Gashebels im Betätigungsmuster BM oder mit einem Betätigungsgrad von maximal 10% bewegen sich die Messerträger wieder um einen Versatz c und gelangen beim automatischen Stopp in die dritte Ausrichtung. Damit kann der Bediener die noch verbleibenden vorderseitigen Kanten 61 der Messer des ersten Messerträgers 6 und die rückseitigen Kanten 72 der Messer des zweiten Messerträgers 6 nachschärfen. In Fig. 7 ist beispielhaft gezeigt, dass der Parameter p ganzzahlig gewählt ist, um nach Durchlaufen von p Zyklen wieder die initiale Ausrichtung der Messerträger 6,7 zueinander zu erreichen. Damit kann der Bediener besonders leicht voraussehen, wann die Messerträger 6, 7 eine bestimmte Ausrichtung zueinander einnehmen werden. Dadurch ist jedoch auch die Anzahl an Ausrichtungen limitiert. Es kann daher auch vorgesehen sein, p nicht ganzzahlig zu wählen, um die Vielfalt an erzielbaren Ausrichtungen zu erhöhen.

Durch die langsame Bewegung der Messerträger 6, 7 im Positioniermodus PM kann der Bediener durch Loslassen des Gashebels 5 jegliche gewünschte Ausrichtung der Messerträger 6, 7 zueinander mit wenigen Versuchen herbeiführen. Ist ein alternierender Drehzahlverlauf vorgesehen, stoppen die Messerträger zusätzlich automatisch in inkrementell verschobenen Ausrichtungen und der Bediener muss lediglich den Gashebel innerhalb der zweiten Haltedauer TP loslassen, wenn ihm die Ausrichtung zusagt. Die beschriebenen verschiedenen Ausführungsformen der bedienergesteuerten Positionierung mindestens eines angetriebenen Messerträgers 6 lässt sich auch für Gartengeräte 1 verwenden, bei denen die Kontrolleinrichtung 9 keine Informationen zu einer Stellung eines Rotors des Antriebsmotors 10 besitzt.

**Patentansprüche**

1. Handgehaltenes Gartengerät (1) zur bedienergesteuerten Positionierung eines Messerträgers, insbesondere eine Heckenschere oder eine Kreiselschere, umfassend mindestens einen hin- und hergehend angetriebenen Messerträger (6, 7), einen Handgriff (3) mit einem Gashebel (5), einen Antriebsmotor (10) zum Antrieb des Messerträgers (6,7) und eine Kontrolleinrichtung (9) zur Steuerung einer Drehzahl (n) des Antriebsmotors (10), **dadurch gekennzeichnet, dass** die Kontrolleinrichtung (9) ausgebildet ist, die Drehzahl (n) des Antriebsmotors (10) in Abhängigkeit von einem auswählbaren Positioniermodus (PM) des Gartengeräts zu steuern, wobei die Drehzahl (n) des Antriebsmotors (10) in dem Positioniermodus (PM) auf eine Positionierdrehzahl (n.pos) begrenzt ist, derart, dass der Messerträger (6, 7) im Positioniermodus (PM) höchstens zweimal pro Sekunde, insbesondere höchstens einmal pro Sekunde, hin- und her bewegt wird.

2. Handgehaltenes Gartengerät (1) nach dem vorhergehenden Anspruch, **dadurch gekennzeichnet, dass** die Kontrolleinrichtung (9) ausgebildet ist, den Positioniermodus (PM) durch eine Betätigung des Gashebels (5) zu aktivieren, insbesondere, wenn die Kontrolleinrichtung (9) erfasst, dass i) der Gashebel (5) mit einem Betätigungsgrad (BTG) betätigt wird, der kleiner gleich einem Grenzbetätigungsgrad ist, oder ii) der Gashebel (5) in einem in der Kontrolleinrichtung (9) abgespeicherten Betätigungsmuster (BM) betätigt wurde und der Gashebel (5) innerhalb eines festgelegten Zeitglieds (TA) nach Ausführen des Betätigungsmusters (BM) betätigt wird oder iii) ein vom Gashebel (5) verschiedenes Bedienelement (15) des Gartengeräts betätigt wurde und der Gashebel (5) danach innerhalb eines festgelegten Zeitglieds betätigt wird.

3. Handgehaltenes Gartengerät (1) nach einem der vorhergehenden Ansprüche, **dadurch gekennzeichnet, dass** die Kontrolleinrichtung (9) ausgebildet ist, den Positioniermodus (PM) zu deaktivieren, wenn die Kontrolleinrichtung (9) erkennt, dass i) der Gashebel (5) losgelassen wurde oder ii) ein Betätigungsgrad (BTG) des Gashebels (5) einen Grenzbetätigungsgrad des Gashebels überschritten hat oder iii) sich ein Betätigungsgrad (BTG) des Gashebels (5) um mindestens eine Grenzbetätigungsspanne des Gashebels (5) erhöht hat oder iv) eine Positionierzeitspanne (TP), die seit einer Aktivierung des aktuellen Positioniermodus (PM) vergangen ist, größer ist als eine in der Kontrolleinrichtung (9) hinterlegte maximale Positionierzeitspanne.

4. Handgehaltenes Gartengerät (1) nach dem unmittelbar vorhergehenden Anspruch, **dadurch gekennzeichnet, dass** das Gartengerät (1) einen Arbeitsmodus (AM) aufweist, und dass das Gartengerät (1) derart ausgebildet ist, dass es unmittelbar vom dem Positioniermodus (PM) in den Arbeitsmodus (AM) übergeht, wenn die Kontrolleinrichtung erkennt, dass sich der Betätigungsgrad (BTG) des Gashebels (5) um mindestens die Grenzbetätigungsspanne erhöht hat.

5. Handgehaltenes Gartengerät (1) nach einem der vorhergehenden Ansprüche, **dadurch gekennzeichnet, dass** die Kontrolleinrichtung (9) ausgebildet ist, im Positioniermodus (PM) die Drehzahl (n) des Antriebsmotors (10) derart zu steuern, dass die Drehzahl (n) innerhalb eines ersten Drehzahlbereichs liegt, wobei der erste Drehzahlbereich von Null Umdrehungen pro Minute bis zu einer Positionierdrehzahl (n.pos) reicht, wobei die Positionierdrehzahl (n.pos) höchstens 2% einer Nenndrehzahl (n.nenn) des Antriebsmotors (10) entspricht.

6. Handgehaltenes Gartengerät (1) nach dem unmittelbar vorhergehenden Anspruch, **dadurch gekennzeichnet, dass** die Kontrolleinrichtung (9) ausgebildet ist, im Positioniermodus (PM) die Drehzahl (n) des Antriebsmotors (10) auf einer konstanten Drehzahl, insbesondere der Positionierdrehzahl (n.pos), für eine erste Haltedauer zu halten.

7. Handgehaltenes Gartengerät (1) nach Anspruch 5, **dadurch gekennzeichnet, dass**, die Kontrolleinrichtung (9) ausgebildet ist, im Positioniermodus (PM) die Drehzahl (n) des Antriebsmotors (10) innerhalb des ersten Drehzahlbereichs alternierend zu steuern.

8. Handgehaltenes Gartengerät (1) nach dem unmittelbar vorhergehenden Anspruch, **dadurch gekennzeichnet, dass** die Kontrolleinrichtung (9) ausgebildet ist, im Positioniermodus (PM) die Drehzahl (n) des Antriebsmotors (10) zyklisch auf null Umdrehungen pro Minute zu setzen.

9. Handgehaltenes Gartengerät (1) nach einem der Ansprüche 7 bis 8, **dadurch gekennzeichnet, dass** die Kontrolleinrichtung (9) ausgebildet ist, im Positioniermodus (PM) die Drehzahl (n) des Antriebsmotors (10) für eine zweite Haltedauer (TS) auf null Umdrehungen pro Minute konstant zu halten.

10. Handgehaltenes Gartengerät (1) nach einem der Ansprüche 7 bis 9, **dadurch gekennzeichnet, dass** das Gartengerät (1) derart ausgebildet ist, dass sich der Antriebsmotor (10) zwischen einem ersten Stopp und einem unmittelbar folgenden Stopp um eine Anzahl (x) an Umdrehungen gedreht hat und der Messerträger (6, 7) für eine Hin- und Her-Bewegung eine Anzahl (y) an Umdrehungen des Antriebsmotors (10) benötigt und wobei die Anzahl (x) der Umdrehungen zwischen den Stopps kein Einfaches oder Vielfaches der Anzahl (y) der benötigten Umdrehungen ist und/oder ii) wobei die Anzahl (y) der benötigten Umdrehungen kein Vielfaches der Anzahl (x) der Umdrehungen zwischen den Stopps ist.

11. Handgehaltenes Gartengerät (1) nach einem der Ansprüche 2 oder 3, **dadurch gekennzeichnet, dass** der Grenzbetätigungsgrad in der Kontrolleinrichtung (9) hinterlegt ist und aus einem Wertebereich von 10% Betätigungsgrad (BTG) bis 50% Betätigungsgrad (BTG) gewählt ist.

12. Handgehaltenes Gartengerät (1) nach Anspruch 3, **dadurch gekennzeichnet, dass** die Grenzbetätigungsspanne in der Kontrolleinrichtung (9) hinterlegt ist und ein Abschnitt einer Betätigungsspanne (BTS) ist, insbesondere zwischen 10% und 50% der Betätigungsspanne (BTS) beträgt.

13. Handgehaltenes Gartengerät (1) nach einem der vorhergehenden Ansprüche, **dadurch gekennzeichnet, dass** der Antriebsmotor (10) von einem oder mehreren Akkumulatoren (8) mit Energie versorgt wird.

Fig. 1

Fig. 2

Fig. 3

Fig. 4

Fig. 5

Fig. 6

(1)  (2)  (3)  (4)

(7)  (6)  (5)

Fig. 7

Europäisches
Patentamt

European
Patent Office

Office européen
des brevets

## EUROPÄISCHER RECHERCHENBERICHT

Nummer der Anmeldung

EP 25 21 5676

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | EP 3 199 017 A1 (YAMABIKO CORP [JP]) 2. August 2017 (2017-08-02) | 1-5,8, 11-13 | INV. A01G3/053 |
| Y | * Absätze [0034], [0035]; Abbildung 2 * ----- | 6,7,9,10 | |
| Y | US 2016/113209 A1 (SERGYEYENKO OLEKSIY P [US] ET AL) 28. April 2016 (2016-04-28) * Absätze [0028], [0029] * ----- | 6,7,9,10 | |
| A | WO 2018/010699 A1 (POSITEC POWER TOOLS SUZHOU CO LTD [CN]) 18. Januar 2018 (2018-01-18) * Seite 48 - Seite 49 * ----- | 8 | |

**RECHERCHIERTE SACHGEBIETE (IPC)**

A01D
H01H
A01G

Der vorliegende Recherchenbericht wurde für alle Patentansprüche erstellt

| Recherchenort | Abschlußdatum der Recherche | Prüfer |
|---|---|---|
| Den Haag | 12. März 2026 | Nédélec, Morgan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

# EP 4 748 222 A1

**ANHANG ZUM EUROPÄISCHEN RECHERCHENBERICHT**
**ÜBER DIE EUROPÄISCHE PATENTANMELDUNG NR.**   EP 25 21 5676

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2026

| Im Recherchenbericht angeführtes Patentdokument | Datum der Veröffentlichung | Mitglied(er) der Patentfamilie | Datum der Veröffentlichung |
|---|---|---|---|
| EP 3199017 A1 | 02-08-2017 | CN 107105615 A | 29-08-2017 |
| | | EP 3199017 A1 | 02-08-2017 |
| | | JP 6469726 B2 | 13-02-2019 |
| | | JP WO2016113770 A1 | 19-10-2017 |
| | | US 2017326721 A1 | 16-11-2017 |
| | | WO 2016113770 A1 | 21-07-2016 |
| US 2016113209 A1 | 28-04-2016 | CN 205454772 U | 17-08-2016 |
| | | EP 3014980 A1 | 04-05-2016 |
| | | US 2016113209 A1 | 28-04-2016 |
| | | US 2017223902 A1 | 10-08-2017 |
| WO 2018010699 A1 | 18-01-2018 | CN 107979254 A | 01-05-2018 |
| | | WO 2018010699 A1 | 18-01-2018 |

EPO FORM P0461

Für nähere Einzelheiten zu diesem Anhang : siehe Amtsblatt des Europäischen Patentamts, Nr.12/82

18